# EUROPEAN PATENT SPECIFICATION

(11) **EP 4 622 587 B1**
(45) Date of publication and mention of the grant of the patent: **02.12.2026**
(21) Application number: 23812905.0
(22) Date of filing: 22.11.2023
(51) Int. Cl.: A61C 5/46, A61C 5/40

(54) **ENDODONTIC NEEDLE ASSEMBLY, METHOD OF FORMING THE SAME, AND ENDODONTIC APPARATUS**
ENDODONTISCHE NADELANORDNUNG, VERFAHREN ZUM BILDEN DERSELBEN UND ENDODONTISCHE VORRICHTUNG
ENSEMBLE AIGUILLE ENDODONTIQUE, MÉTHODE DE FORMATION DE DUDIT ENSEMBLE ET APPAREIL ENDODONTIQUE

(30) Priority: 23.11.2022 EP 22209102
(43) Date of publication of application: 01.10.2025
(73) Proprietor: Odne AG, 8600 Dübendorf (CH)
(72) Inventor: SCHNEIDER, Andreas, 8406 Winterthur (CH); SCHMOCKER, Andreas, 08012 Barcelona (ES); BISPINGHOFF, Mark, 8051 Zürich (CH)
(74) Representative: GatesIP
(86) International application number: PCT/EP2023/082747
(87) International publication number: WO 2024/110551

(56) References cited:
- US-A1- 2006 234 183
- US-A1- 2018 153 644
- US-A1- 2020 297 456

## Description

### Field of Invention

The present invention relates to a needle assembly for endodontic procedure and a method of forming an endodontic needle assembly. The invention also relates to a dental apparatus and method, particularly an endodontic apparatus and method for endodontic debridement, irrigation, and/or disinfection.

### Background

Root canal treatment is used to preserve teeth in the event of severe infection. A typical root canal treatment procedure involves the steps of: (i) opening the cavity and accessing the pulp and the root canal; (ii) using mechanical instrumentation and enlargement with files (iii) chemical irrigation with sodium hypochlorite (bleach, NaOCl), EDTA and/or other chemical agents (using a syringe), typically repeated several times; (iv) optional activation of NaOCl/chemical agents with an ultrasonic cleaning device and (iv) obturation (or filling) of the root canal and closing the tooth. Such multi-step procedures are very laborious and can take around 60 min or more to complete.

Some of the common problems faced by a dentist when performing a root canal procedure include one or more of: substantial time and labour required to enlarge canals; risk of weakening of the tooth structure through filing of canals; risk of file breaking inside the root canal and not being able to retrieve it; risk of failure to remove bacteria in smallest of canals to avoid reinfection through small canals, either not being found and/or by the irrigant not reaching the canals; the occurrence and/or detection of vapour lock within the canal (when air is trapped and unable to escape and pass the liquid above, blocking the irrigant from disinfecting the apical third of the canal); the risk of NaOCl extruding past the apex into the soft and hard tissues; and/or blood inflow from outside the tooth.

Several systems are commercially available that seek to provide improved irrigation of root canals and address or mitigate at least some of the above problems. Such systems are intended to provide enhanced hydrodynamic action in the irrigant to provide improved cleaning, debridement and/or disinfection. Whilst many root canal activation systems claim to generate 'cavitation' to ensure efficient root canal disinfection, the applicant has found that this is not sufficient in practice. For example, in many systems, the cavitation generated is limited and appears to be non-inertial cavitation in which bubbles in the fluid merely oscillate in size and/or shape. Non-inertial cavitation does not cause collapsing bubbles which result in powerful shockwaves as seen in inertial cavitation. Further, the applicant has also found that many of the existing solutions are unable to generate cavitation within the thin canal portions of the tooth (for dimensions smaller than 500µm or even below 100µm) which is needed to provide effective cleaning, debridement and/or disinfection. A further disadvantage of existing systems is that due to their limited effectiveness or large size they require the use of NaOCl or other agents to clean narrow canals or small adjacent volumes, thus putting patients at risk due to potential NaOCl leakage through the apical opening, for instance into sinuses.

US 2006/234183 discloses an endodontic tool comprising a sonic or ultrasonic driven activator. US 2018/153644 discloses an endodontic device comprising a first cannula and a second cannula that are movable relative to one another to an extended position. US 2020/297456 discloses a method of manufacturing a needle for root canal treatment devices. These documents may be relevant for understanding the background of the present technology.

Accordingly, the applicant has proposed an improved endodontic apparatus and methods in their co-pending international patent application PCT/EP2022/061638 which is referred to herein. This co-pending application discloses a system and method which seeks to ensure that inertial cavitation occurs within the root canal by providing a system which is of sufficient length and small enough external diameter to enter at least the coronal part of the root canal (in contrast to many prior art devices where the needle is merely inserted into the pulp chamber). This method and system results in a cloud of inertial cavitation being formed within the irrigant fluid in narrow spaces using a relatively low system pressure and a backflow of fluid.

The applicant has now identified that, whilst the systems and methods in PCT/ EP2022/061638 are highly advantageous, currently available needles present limitations in the provision of commercially attractive embodiments. For example, the needle size selection must compromise between larger needle diameters (which cannot enter the smallest root canal regions or non-instrumented root canals) and smaller needles which may require a higher operational pressure to induce cavitation. Whilst such pressures may still be significantly lower than those of prior art systems, any requirement to increase operating pressure directly impacts the system costs (for example, by requiring more expensive, higher-rated pressure pumps) and is, therefore, commercially disadvantageous. Further, since all needles used in embodiments are small (for example between 30G and 34G according to the Birmingham gauge system) care must be taken to ensure that the selected needle has sufficient pressure resistance for safe and effective operation.

Thus, embodiments of the present invention seek to provide further improvements and advantages in methods and apparatus for root canal procedures. In particular, some embodiments seek to provide needle assemblies which are suitable, and/or specifically optimised, for endodontic apparatus and methods.

### Summary of Invention

The invention pertains to needle assembly for endodontic procedure apparatus, as defined in claim 1, to an endodontic apparatus, as defined in claim 10, to a method of forming a needle for the needle assembly, as defined in claim 14, and to a method of forming an endodontic needle assembly comprising a body and a needle, as defined in claim 17. Further embodiments are set out in the appended dependent claims. having a tensile modulus of less than 10 GPa. The needle may be formed of a material having an ultimate tensile strength of at least 15MPa. The needle may have a length of at least 20mm.

Advantageously the needle of embodiments is formed from a polymer. The use of a polymer is advantageous in providing a flexible needle in use and also generally provides a high ductility (for example in comparison to metal used for many conventional needles). The applicant has found that the ductility of polymers enables the needle manufacturing process to form a particularly small and thin walled needle tip (for example by using a drawing process as will be described below).

It will be appreciated that ultimate tensile elongation is a commonly used measure of ductility (and can for example be measured using established ISO or ASTM procedures). In embodiments, the needle may be formed from a polymer having a ultimate tensile elongation of at least 5%. In some embodiments the needle may be formed from a polymer having an ultimate tensile elongation of at least 50% (for example 100% or more).

It may also be appreciated that the needle of embodiments is formed from a material with a tensile modulus which is greater than that of many polymer materials. The applicant has identified that such a relatively high tensile modulus enables the needle to have a sufficiently small tip (and thin wall diameter) whilst also withstanding the pressures required to create a cloud of inertial cavitation forward of the needle tip during endodontic irrigation procedures in root canals. The combination of wall thickness and tensile modulus has been found to provide a needle which is sufficiently stiff for insertion into the root canal as well as withstand the necessary pressures and also flexible enough to be inserted into curved canals. In contrast, prior art needles, which are typically made from steel have insufficient flexibility to reach curved parts of root canals.

In some embodiments the needle is formed from a material having a tensile modulus of between 1.5GPa and 10Gpa. For example the tensile modulus may be greater than 2GPa. For example the tensile modulus may be less than 7.5GPa, for example less than 5GPa. In some embodiments the needle is formed from a material having an ultimate tensile strength of between 40MPa and 150MPa. For example the ultimate tensile strength may be greater than 50MPa. For example the tensile modulus may be less than 100MPa. For example, the ultimate tensile strength may be between 60 and 80MPa.

The needle has a tapered profile. The external diameter of the needle portion may converge towards the distal tip. The needle may for example be generally conical and may have a frustoconical profile. It has been found that a conical needle enables cavitation at lower pressure, and/or a lower pressure difference between device and tip, in comparison to a conventional cylindrical needle profile. The applicant has also found that a conical needle is less prone to becoming stuck on the uneven wall structure of the root canal due to the tendency for the conical needle to cause the tip of the needle to be positioned in the centre of the canal.

A conical needle also enables a significant reduction in the tip diameter to ensure that the tip can be positioned into complex or thin geometries and canals. The external diameter of the tip may, for example, be less than 50% of the diameter of the proximal end of the needle. In some embodiments the external diameter of the tip is between 10 to 30% of the diameter of the proximal end of the needle. In embodiments the conical needle tip diameter is less than a 32G needle (for example less than 320µm) and in some embodiments less than a 33G needle (for example less than 200µm). The proximal end of the conical needle (which would be at least 20mm from the tip) may have a diameter of at least 500µm, for example in some embodiments at least 700µm. In some embodiments the rate of change of diameter may vary along the length of the needle. For example, at the distal end of the needle the change in diameter may be less than 0.02mm/mm and may be up to 0.05mm/mm at the proximal end.

The applicant has surprisingly found that current commercial needle manufacturing methods are unable to produce conical needles with extremely small tip diameters (for example commercially available injection moulded plastic irrigation tools have a cannula with a tip size of 30G and are formed of polymers which cannot withstand the pressure required to induce cavitation). In embodiments the needle comprises a needle which is formed in a two-stage process. The needle is initially manufactured in a cylindrical form (for example by injection moulding or an extruded tube) and is then subsequently formed into a conical shape (for example by extrusion or drawing). The applicant has found that this two-stage process provides a highly effective needle for use in endodontic procedures. It will be appreciated that the two-stage process may also include additional manufacturing steps for example finishing processes applied to the conical needle or initial steps to make a plurality of cylindrical sections of a required length from a larger tubing section. The cylindrical needle may be a non-extruded needle, for example an injection moulded needle. The cylindrical needle may be polycarbonate. The cylindrical needle may be a bio-compatible polymer. In other embodiments the needle could be one of polyethylene, polypropylene, polyurethane, polyvinylchloride, polysulfone, polymethylmethacrylate, polystyrene, polyamide and other polymers fulfilling the mechanical properties. These can also be combined in copolymers, blends or composites.

The applicant has found that the high flexibility of needles in accordance with embodiments is advantageous. For example needles of embodiments may be laterally bendable/deflectable within the canal. The needle of embodiments is, for example, able to access curved and/or non-instrumented sections of root canals. This enables needles of embodiments to access the full root canal where existing needles can only enter the upper portions. The applicant has recognised that it is advantageous to have a needle with a tip which can be deflected by a relatively low load. As such, in embodiments the lateral deflection of the needle for a given tip loading may be a key criteria in determining whether the needle can be easily inserted into a minimal instrumented root canal. The skilled person will appreciate that lateral tip deflection of a needle can be readily determined by fixing the proximal end of the needle (for example the applicant has found a point of 20mm from the tip to be useful for measurement) and applying a load at (or proximal to) the tip and measuring the resultant lateral deflection.

Thus, the applicant has identified that a needle assembly of embodiments may have a tip which is laterally deflectable by more than 2mm with a tip load of 0.01N. In particular the tip may be laterally deflectable by more than 4mm (for example by 5mm or more) under a tip load of 0.01N. Additionally or alternatively, the tip may be laterally deflectable by more than 8mm under a load of 0.05N (for example the tip may deflect by at least 10mm). The tip deflection may be measured perpendicular to the axis of the undeflected needle. The tip deflection under load may be determined with the proximal end of the needle fixed (for example the needle may be fixed at a point 20mm axially from the tip).

The needle of the present invention comprises a primary axially directed outlet at the tip.

The axially directed outlet ensures that the flow from the needle can generate a cloud of inertial cavitation ahead of the needle tip (and directly contrasts with prior art arrangements which may include an impingement surface which blocks axial flow from the tip). In some embodiments the needle may additionally or alternatively comprise at least one side vent in the wall of the needle between proximal end at the body portion and the distal tip. One or more side vents may enable at least a portion of the flow from the needle to be directed directly at the wall of the root canal. It will be appreciated that in various embodiments a side vented needle may be used with or without a primary axially directed outlet.

According to a further aspect of the invention, there is provided a method of forming an endodontic needle. The method comprises providing a cylindrical preform of a first length and a first diameter and forming the cylindrical preform into a conical needle which tapers inwardly along its length, the conical needle having a length greater than the first length and a diameter at the tip end which is less than the first diameter.

The preform may be provided by injection moulding or extrusion. The forming of the conical needle may be by extrusion or drawing.

In embodiments the method may further comprise forming a needle assembly, the needle assembly comprising a body and a needle in accordance with an embodiment. The method may comprise moulding the needle assembly with the cylindrical preform

The method comprises: moulding a needle assembly, the assembly comprising a body portion and a cylindrical preform; and forming the cylindrical preform into a conical form which tapers inwardly along the length to provide a tip having an external diameter no more than 300µm (for example no more than 200 µm).

The method may further comprise a preliminary step of forming a cylindrical needle, for example by injection moulding or extrusion of a cylindrical needle. The cylindrical needle may, for example be formed from polycarbonate.

The step of drawing/towing the cylindrical needle into a conical form which tapers inwardly along the length may also elongate the needle to a length of at least 20mm. It will be appreciated that the conical needle forming step may enable the length and diameter of the final needle to be tailored to a specific requirement.

The step of moulding a needle assembly may comprises providing a needle and moulding the body portion to affix the needle into an integral needle assembly. For example, the body portion may be affixed to the needle by overmoulding. Moulding of the needle assembly to affix the needle may be carried out prior to the drawing/towing of the cylindrical needle into a conical form. In other embodiments the needle may be attached to the body portion by bonding, gluing, interlocking or laser welding. Alternatively, the conical needle may be glued to a body which may be a plastic or metallic needle or hub.

Advantageously, methods according to embodiments may reduce the number of parts and production steps in forming the needle assembly. Further the methods may enable a needle assembly to be specifically shaped for accessing a root canal (for example with specifically angled portions. Embodiments also advantageously provide a needle assembly in which the sub components are reliably sealed and pressure resistant.

Whilst the needle assembly of embodiments has been specifically designed for use in endodontic debridement, irrigation, and disinfection apparatus (of the type discloses in the applicant's co-pending application PCT/EP2022/061638), the skilled person will appreciate that the needle may also be useful in other root canal procedures since it enables increased access to fine canal regions. For example, needles in accordance with embodiments may be used for injecting/placing a material such as an obturation material in the root canal. In such procedures the needle assembly of embodiments may enables syringe injection of high viscosity material in regions where a manual injection would not be possible (for example because the pressure is too high). Additionally, needles in accordance with embodiments may be used for manual irrigation of root canals, in which case they are connected to a syringe and used to deliver the irrigant fluid. In such procedures, the needle assembly of embodiments may provide better performance due to its increased flexibility and conical shape. Further uses may for example include the treatment of caries infections or other dental or medical procedures requiring disinfection or delivery of a fluid agent (for example periodontitis, cleaning of dental implants, wound disinfection, etc.). According to another aspect of the invention there is provided an endodontic apparatus, the apparatus comprising: a supply of irrigant fluid; a pump for delivering irrigant fluid from the supply under pressure; a handpiece in fluid communication with the pump and comprising a needle assembly as defined in claim 1, having a needle extending from a rearward end proximal to the handpiece to a forward tip distal from the handpiece, an opening at the tip deliver fluid received from the pump into a tooth cavity; and wherein the needle has a length, extending from its rearward end to its tip, of at least 20mm, an external diameter no more than 200 µm and a wall thickness of less than 50 µm (for example between 40 and 20 µm)such that the needle tip is positionable within a portion of the root canal; and
and the pump delivers irrigant at a delivery pressure less than 80 bar and in excess of a threshold cavitation pressure such that the flow of irrigant through the needle causes a cloud of inertial cavitation to be formed within the irrigant fluid in the root canal forward of the needle tip.

Once the needle is positioned within the root canal (in such a manner to allow the creation of a backflow) the specific pressure required to generate a cloud of inertial cavitation can be selected based upon the specific needle and canal geometry. Such threshold pressures can, for example, be determined for a variety of needle sizes.

The delivery pressure may be selected such that the minimum exit velocity of the irrigant at the needle tip is at least 20 m/s (and for example at least 30m/s, in particular the velocity may be between 20 and 60m/s, for example between 30 and 50m/s, in a particular embodiment the threshold cavitation point may be approximately 38m/s). The flow rate of irrigant through the needle is below 175ml/min (and for example less than 50 ml/min, for example between 10 to 50ml/min, for example 20 to 40ml/min, in a particular embodiment the flow at the minimum threshold cavitation point may be approximately 30ml/min). In contrast, prior art systems have been proposed, which use flows of irrigant as high as 50ml/s (3000ml/min), which would result in much greater risk of inducing pain or damage to periapical structures in comparison to embodiments of the invention.

As embodiments of the invention utilise the hydrodynamic effects of the cavitation cloud to provide debridement and/or disinfection action, it may not be necessary to utilise chemical disinfection agents such as NaOCl for debridement, irrigation, and/or disinfection. As such, advantageously, embodiments of the invention may use water or saline solution as the irrigant fluid. Saline solution, particularly physiological saline solution (for example 0.9 % NaCl), is generally better tolerated by the body in the event of extrusion beyond the apex and is less likely to cause significant pain, discomfort, or severe adverse events, such as "hypochlorite accidents", to the patient than chemical disinfectants such as NaOCl.

In embodiments, the size of the cavitation cloud extends to 0.5 mm, 1mm, 3mm, 5mm, 7mm, 10mm, 15mm, or 20mm beyond the distal tip of the needle, and its position and size are adapted by changing the needle size, exit speed and/or flow rate.

The irrigant fluid, for example, saline, may include one or more additives. For example, the irrigant fluid may further comprise a disinfecting or antibacterial agent. These include for example alcohol, chlorine, iodine or active-oxygen based disinfectants or quaternary ammonium compounds (QACs) commonly used to disinfect skin, surfaces or devices. Such agents can be liquid, dissolved, or suspended within the irrigant, for example in the shape of nanoparticles. The disinfecting or antibacterial agent may enhance the bactericidal effect of the irrigant. The irrigant could be a low surface tension liquid such that cavitation occurs more readily at a lower pressure and/or temperature, for example ethanol could be used as a low surface tension liquid which is also a disinfecting agent. The viscosity of the liquid is also a variable in the cavitation conditions of the irrigant, as such a low viscosity fluid could be selected as the irrigant. The low surface tension and/or low viscosity fluid could be an irrigant selected with such properties or could be an irrigant with an additive which reduces its properties. The irrigant fluid may include a dye, for example for better detectability of the fluid or to stain soft tissue or bacteria biofilms.

The irrigant may also be selected or tailored to increase its abrasive impact. For example, the density of the irrigant may be increased and/or the irrigant fluid may further comprises abrasive particles (for example solid particles suspended in the fluid).

The apparatus may include a regulator for controlling the delivery pressure. This may enable the operator to adjust the delivery pressure for example to account for different geometries of the tooth or root canal.

In embodiments the apparatus may further comprise a heater to control the temperature of the irrigant. The heater could be provided as a part of the supply (such that it either bulk heats the irrigant or heats the irrigant prior to delivery by the pump). Alternatively, the heater could be provided as part of the handpiece such that it heats the irrigant as it flows through the handpiece. The phase boundary of the irrigant is dependent upon both temperature and pressure and increasing the temperature of the irrigant for any given temperature will provide more favourable conditions for cavitation. For example, the temperature may be increased to greater than 20°C. The temperature of the irrigant may also be selected to avoid any pain reaction and as such the temperature may be less than 60 °C (or less than 50 °C).

In some embodiments, the apparatus may further comprise a pulse generator to pulse the flow of irrigant fluid. The pulse generator may, for example, be a single-piston pump, a controllable pressure release valve between the pump and needle, or an open and closing valve between the pump and needle.

Unless otherwise stated, each of the integers described may be used in combination with any other integer as would be understood by the person skilled in the art. Further, although all aspects of the invention preferably "comprise" the features described in relation to that aspect, it is specifically envisaged that they may "consist" or "consist essentially" of those features outlined in the claims. In addition, all terms, unless specifically defined herein, are intended to be given their commonly understood meaning in the art.

Further, in the discussion of the invention, unless stated to the contrary, the disclosure of alternative values for the upper or lower limit of the permitted range of a parameter, is to be construed as an implied statement that each intermediate value of said parameter, lying between the smaller and greater of the alternatives, is itself also disclosed as a possible value for the parameter.

In addition, unless otherwise stated, all numerical values appearing in this application are to be understood as being modified by the term "about".

Whilst the invention has been described above, it extends to any inventive combination of the features set out above or in the following description or drawings.

### Description of the Drawings

Embodiments of the invention may be performed in various ways, and embodiments thereof will now be described by way of example only, reference being made to the accompanying drawings, in which:
**Figure 1** shows a schematic of an apparatus in accordance with an embodiment of the invention;
**Figure 2** shows a detail of the schematic of figure 1 showing the needle position within a tooth;
**Figures 3(A), 3(B), 3(C) and 3(D)** represent the working principle behind embodiments of the invention;
**Figure 4** is a schematic representation of a needle assembly in accordance with an embodiment of the invention;
**Figure 5** is a flow chart representing the method of forming a needle assembly in accordance with embodiments;
**Figure 6A and 6B** show an example of the stages of forming a needle assembly in accordance with an embodiment;
**Figure 7** is a graph showing the pressure required to induce inertial cavitation for a variety of needles, and
**Figure 8** is a graph showing the deflection of different endodontic needles under load.

### Detailed Description of Embodiments

It may be noted that proximal and distal are used herein to conveniently refer to the device in its typical in use orientation. Thus, it will be understood that proximal will generally mean a surface, component or direction which is proximal to the operator's hand during use and distal may be used to generally mean the surface, component, or direction distal to the operator's hand (and which will therefore be proximal to the root canal). Forward will likewise be understood to be used with respect to the directions away from the proximal end and towards the distal end (and rearwards understood to be the reverse direction). However, it will be appreciated that such references are not intended to be limiting and that the device may take any orientation in use.

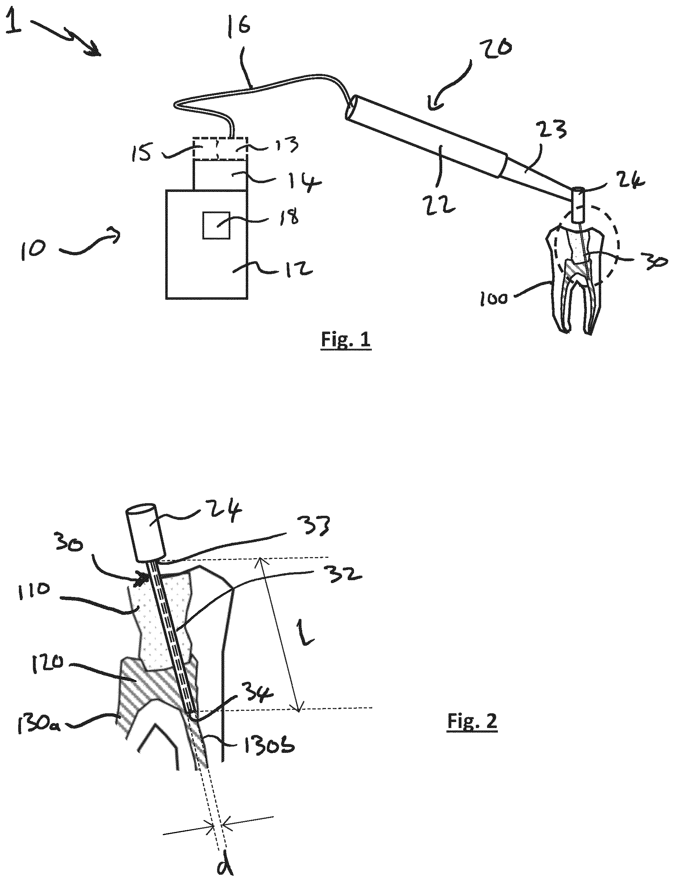

An endodontic irrigation apparatus 1 is shown schematically in figure 1. The apparatus comprises a base unit 10 including a reservoir 12 containing a supply of irrigant fluid and a pump 14 for delivering irrigant fluid from the supply under pressure through the flexible conduit 16. The base unit 10 may include a pressure sensor to monitor and control the pressure, an overpressure relief valve, and a wastewater container. The base unit 10 may also include a user interface 18 (which may be of any convenient format) and may enable an operator to adjust operating parameters such as the pressure output of the pump 14.

A handpiece 20 is connected to the distal end of the flexible conduit 16, for example by a conventional removable connector, such that the handpiece 20 is in fluid communication with the base unit 10 and can receive irrigant fluid from the supply 12 via pump 14. The handpiece 20 includes a grip portion 22 at a proximal end and a head 24 connected via a neck 23 to the grip portion 22. The head 24 extends to a needle 30 which may typically be replaceably mounted into the head 24. It may be appreciated that as used herein the term "needle" refers broadly to a thin elongate conduit having a bore (the "lumen" of the needle) extending therethrough and extending from a proximal end for receiving a supply of fluid in use to an opening at a distal end for delivering fluid in use. As best seen in figure 2, the needle extends axially from a proximal end 33 to a distal tip end 34 and has a length l. A lumen 32 extends through the length of the needle 30 to provide a passageway for irrigant. The tip of the needle 34 ends with a forward-facing axial opening such that the irrigant is expelled in a forward axial stream from the lumen.

In use the needle 30 is inserted into a tooth 100 via a cavity 110 (formed by any convenient manner for example by drilling) which provides access to the pulp chamber 120. In accordance with embodiments of the invention the needle has a length, measured in direction l, of at least 5mm and an external diameter, measured in direction d, of no more than 300 µm such that the needle tip 34 is able to be positioned within a portion of the root canal 130. With the needle positioned in such a manner the applicant has surprisingly found that provided the irrigant is supplied in a manner which creates a cloud of inertial cavitation forward of the needle tip 34 it will provide effective debridement and/or disinfection without the need for an NaOCl based irrigant. In contrast, many prior art systems use a needle which is either too short to reach the root canal itself (and instead merely position the tip in the cavity 100 or pulp chamber 120) and/or which is of too great a diameter to enter the root canal.

Further, embodiments of the invention enable root canal treatment to be carried out without the need for mechanical filing (at least in all but the most difficult of cases - for example older patients where canals become calcified and narrowed) such that prior to the use of the apparatus of the invention only the initial access to the root canal need be made. In order to provide such a cloud of inertial cavitation the applicant has found that the internal diameter of the needle (i.e. the diameter of the lumen) and delivery pressure should be selected (dependent upon the geometry of the specific tooth and needle combination) which is in excess of a threshold pressure cavitation pressure such that the flow of irrigant through the needle causes a cloud of inertial cavitation to be formed within the irrigant fluid in the root canal forward of the needle tip. For example, the lumen diameter could be at least 25µm, for example at least 50µm. Without understanding of this effect it may be natural to select a needle having too small an internal diameter (for example less than 50 µm in order to ensure that it fits into the root canal), but the applicant recognises that it is important that such a needle will provide frictional loses which mean that even a very high delivery pressure will not provide a flow leaving the needle which creates effective cavitation. In contrast in embodiments of the invention, the cavitation provides strong debridement, disinfection and/ or removal of debris or bacteria due to the well-known erosive effect of cavitation cloud which results from the shockwaves caused by rapidly collapsing vapour bubbles within the fluid.

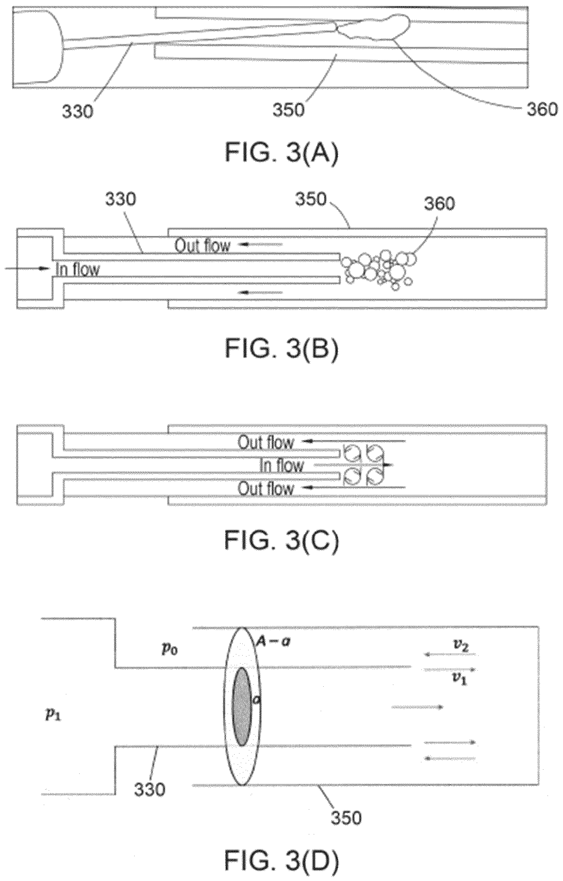

As shown in the 16,000-fps high-speed photograph of figure 3(A) glass micropipettes (having for example inner diameters of 1.2, 0.6mm or 0.29mm) can be used to simulate the root canal. When an appropriately sized needle 330 is inserted into the tube 350 and a flow provided at a pressure exceeding the cavitation threshold a cavitation cloud 360 is clearly formed downstream of the needle. The flow within the tube 350 is illustrated schematically in figure 3(B). Importantly, the size of the needle (no more than 800 µm at20mm from the tip ) ensures that the flow of fluid in the tube (or root canal in practice) includes both an inflow from the needle and an outflow passing between the walls of the tube and the exterior of the needle.

Cavitation occurs under the right conditions when a liquid is transformed rapidly into a gas across the phase boundary. Without being bound by specific theory, the applicant has recognised that, as illustrated in figure 3(C), the selection of a needle which enables a backflow to be generated in the root canal causes a strong shear layer effect to form between the inward and outward flow. This shear layer increased vortices in the flow and significantly increases the occurrence of cavitation. The resulting conditions imply that very strong vortices can be generated at the interface between in and out flow inside the root canal. Inside the vortex, the (dynamic) pressure would be strongly reduced. The reduction in pressure makes cavitation more favourable (bringing the starting point closer to the phase boundary). The result of this effect is that a cavitation cloud is produced within a passage such as a root canal at flow conditions (pressure, speed and flow rate) which would not create cavitation in an open environment. Increasing the speed at which the liquid exists the needle will also aid in increasing the vortices and for a given channel, there will exist a minimum nozzle exit velocity below which cavitation will not occur. Provided the internal diameter of the needle is not overly narrow, the delivery pressure may be used to control the needle exit velocity.

To test the performance of a device in accordance with embodiments, tests were performed on transparent plastic teeth (RepliDens mandibular molar, transparent type 03.2.1, Medcem GmbH, Weinfelden, Switzerland) having a realistic root canal structure filled with coloured gelatine which is used to simulate the tissue inside the tooth. Different devices were tested and the amount of gelatine before and after cleaning was measured using image analysis and pixel counting. The apparatus in accordance with an embodiment used a needle of 20mm length and 30G gauge (corresponding to an internal diameter of 0.16mm and an external diameter of 0.31mm). The delivery pressure was set to 60 bar. The irrigant was saline solution and the needle was positioned and moved up and down the canal for 180 seconds. The results of multiple root canal systems were compared based upon the quantity of gelatine before and after cleaning to determine the % of material removed. The same test was performed using commercial ultrasonic and laser-based irrigant activation systems. In the case of the ultrasonic (EDDY, VDW GmbH, Munich, Germany), the vibrating tips were inserted into each canal and activated for 120 seconds. For the laser system (LiteTouch Er:YAG Laser, Orcos Medical AG, Küsnacht, Switzerland), plastic teeth pulp chamber was filled with water into which the laser tip was placed and activated for 120 seconds. The results are shown in Table 1 below with the embodiment of the invention providing significantly improved debridement in uninstrumented teeth (our invention) than commercially available commercial systems (ultrasonic system (without instrumenting/filing), Laser system (without instrumenting/filing), and instrumented mechanical filing (ProTaper, Dentsply, Ballaigues, Switzerland) followed by syringe irrigation. The experiment found that conventional ultrasonic and laser activation systems failed to adequately remove materials from inside the canals. They thus can be used for activation only, are not fit to treat uninstrumented canals (which may for example be defined as canals which have only been enlarged with an ISO 10 handfile), and cannot reduce the need for mechanical filing. In the case of the ultrasonic system, the tip could not vibrate side to side due to the narrow root canals - dampening the oscillations. In the case of the laser system, we observed that no gelatine would come out of the root canals as not enough flow was generated. The use of mechanical files together with flushing using a syringe filled with water performed better than other methods but was less effective than embodiments of the invention and significantly more time-consuming.

**Table 1: cleaning efficacies of different systems in uninstrumented tooth models**

| | Cleaned area [%] | Standard deviation |
|---|---|---|
| Ultrasonic | 59.7 | 10.3 |
| Laser system | 80.9 | - |
| Mechanical filing | 89.8 | 8.1 |
| This invention | 97.1 | 1.0 |

Importantly, the applicant has also compared the conditions between an open ended and closed/confined area (with the tooth root in being closed). This has demonstrated unexpected results and illustrates the importance of the geometry of the tooth canal and needle on cavitation. It is believed that prior systems have failed to consider this as a factor, and this reflects why such system may fail to provide true effective cavitation.

To demonstrate this effect, we performed an experiment using a delivery pressure of 60 bar connected to needles of different shapes, diameters, and lengths. The water coming out of the needles was ejected into either a (i) bath of water, (ii) a glass micropipette with an open end, or (iii) a glass micropipette completely sealed at one end. The needles tested included needles of standard gauge sizes. The threshold pressure was recorded as the point at which a stable cloud of cavitation was first visible. The threshold for the upstream pressure to generate developed cavitation was generally much lower inside a closed end, narrow canal compared to a free water bath. From the experimental data it was possible to note that 30G (needle gauge) needle with 20mm or 15 mm only generated cavitation inside the micropipette and not in open bath, to generate cavitation in an open bath higher pressure would be required. All other needle sizes including 30G needles with a 10 mm or 5 mm length, cavitate in open water. However, using them inside the micropipettes reduce the needed upstream pressure by 15 bar to 40 bar. An exception was found for the 25G needle and the 0.6mm tube (Table 2; Closed-end micropipette d=0.6mm, 25G) - in this case the needle blocked the backflow itself and therefore cavitation threshold increased after closing the micropipette end (because the external diameter of the needle was very close to the internal diameter of the pipette tube). Thus, the applicant has been able to confirm that the backflow within the passage is required to induce cavitation efficiently.

**Table 2: Cavitation Pressure for various needle configurations**

| | | | **Cavitation pressure threshold [bar]** | | | | |
|---|---|---|---|---|---|---|---|
| **Need le type** | Needle exit diamet er [mm] | Needl e lengt h [mm] | Free in wat er bath | Open-end micropipe tte d=1.2mm | Closed-end micropipe tte d=1.2mm | Open-end micropipe tte d=0.6mm | Closed-end micropipe tte d=0.6mm |
| 30G | 0.159 | 20 | - | - | 80 | 80 | 60 |
| | | 15 | - | - | 60 | 70 | 50 |
| | | 10 | 70 | 50 | 45 | 50 | 30 |
| | | 5 | 70 | 65 | 45 | 50 | 30 |
| 25G | 0.260 | 20 | 70 | 50 | 20 | 20 | - |
| | | 15 | 60 | 50 | 12 | 20 | 70 |
| | | 10 | 50 | 50 | 6 | 15 | 60 |
| | | 5 | 50 | 50 | 3 | 15 | 50 |

The volume flow through the needle is strongly dependent on the upstream pressure and needle diameter. As such when a lower pressure is needed to generate cavitation the volume of the flow is reduced. This is advantageous in practice as lowering the rate of flow and/or the pressure can reduce the risk that the jet induces any unwanted damage in the tooth due to the high flow rate. The experiments found that the highest volume flow was for the biggest needle diameter 25G and lowest flow for smallest diameter 34G. The lowest pressure threshold for cavitation occurred with a 25G needle having a length of 10 mm - this was 6 bar with 72 ml/min. These results showed that inside narrow closed end canals, the threshold for cavitation drops significantly. Thus, embodiments of the invention may generate effective cavitation at lower upstream pressure with a lower volume flow. Such flows provide significant advantages in reduced pressure at the root canal apex and lower volume flow which both minimise the risk of apical extrusion.

Thus, the results confirmed that the properties of the needle (such as diameter, and length) have a significant influence on the threshold cavitation pressure. Furthermore, experiments confirmed that the effect of the backflowing fluid is very important - increasing the relative velocity and the building of vortices, thereby significantly decreases the required pressure to generate cavitation.

The effect of needle length on the cavitation threshold is simple. A longer needle increases the pressure required for cavitation which is considered to be consistent with the fact that a shorter needle will provide less flow resistance. However, in practical embodiments this will generally mean that the selection of needle length is a compromise between the increase in threshold pressure and the length required to position the tip sufficiently within the root canal to deliver the cavitation and efficiently debride the canal.

In some embodiments of the invention may include a heater 15 to increase the temperature of the irrigant (thus moving it closer to the phase boundary for a given pressure and further making cavitation more favourable). The heater 15 may be included as part of the base unit 10 or may be integrated into the handpiece. In some embodiments the pump 14 or base unit may include a pressure regulator.

In addition, or as an alternative to, the user interface 18 the handpiece 20 may include controls such as a switch on the handpiece (or associated with the handpiece for example on a foot pedal). For example, a trigger may be provided for activation of flow through the system.

As embodiments of the invention enable the use of a simple irrigant such as water or saline, it may be appreciated that embodiments may provide for a variety of options in use. For example, the irrigant could be a low-surface tension liquid or a high viscosity liquid. The irrigant could also include additions such as abrasive particles.

In some embodiments the apparatus may include canal sensing system. For example, to ensure liquid does not go past the tooth apex, embodiments may include an apex locator to measure the distance to the apex and help the dentist to operate the device.

Whilst the primary purpose of the endodontic irrigation apparatus of embodiments may be root canal procedures, it may also be appreciated that the debridement and/or disinfection effect of the cavitation stream could also be applied to other uses within a dental practice. For example, the device could be used to for dental plaque removal from the outside of the tooth or at subgingival surfaces. Embodiments could also be used to drill through dental tissue (dentine, enamel) or for cutting of soft tissue. The apparatus could also be utilised to find entrances to root canals.

The applicant has now identified that commercially available needles present disadvantages to the utilisation of the method and apparatus described above. In particular, as needle dimensions and the required system pressure for inertial cavitation are directly related, the needle size selection must compromise between larger needle diameters which cannot enter the smallest root canal regions and smaller needles which may require a higher operational pressure to induce cavitation. Importantly, the required operating pressure of the system can directly impact the operating and equipment cost, for example, by requiring more expensive higher rated equipment such as pumps. As such, the provision of systems which operate effectively at the lowest possible pressure provides both clinical and commercial advantages.

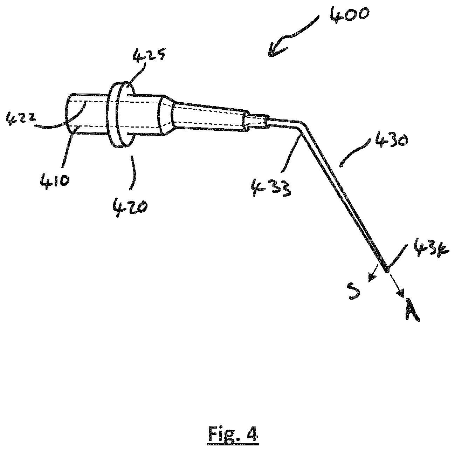

Figure 4 shows a needle assembly 400 in accordance with embodiments of the invention. The needle assembly 400 is a single integral component which may for example be provided as a single-use, sterile, consumable item for use in the irrigation apparatus 1 of figure 1. The needle assembly 400 includes a connector 410, a body portion 420 and a needle 430.

The connector 410 is at the proximal end of the needle assembly and is configured to removably couple to a corresponding coupling portion on a handpiece 20. It will be appreciated that the connector 410 may be of any convenient form and may for example be of an existing standardised form to allow interconnection with existing equipment and/or to provide familiar operation for users. One particularly suitable connector may for example be a Bal Seal (RTM) connector which may include a spring supported retaining arrangement (for example a connector of the type disclosed in US Patent US8167285B2). A body portion of the needle assembly 420 extends forwardly from the coupling and defines a fluid conduit 422 which, in use, delivers irrigant from the handpiece 20 to the needle 430. In the illustrated embodiment a flange 425 is provided around a mid-portion of the exterior of the body 425 and may for example be configured to provide a stop or a tactile feature for use when connecting the needle assembly 400 to a handpiece 20.

The needle 430 extends forwardly from the distal end of the needle assembly. The proximal end of the needle 433 is in fluid communication with the fluid conduit 422 of the body. The distal end of the needle 430 terminates at a tip 434. The axial length of the needle from the proximal end 433 to the tip 434 is at least 20mm. For ease of use the axis of the needle 430 is angled relative to the axis of the body portion 420. The applicant has found that providing the needle 430 extending at an angle of between 30 to 90 degrees, for example approximately 60 degrees, to the body portion 420 is beneficial in enabling the clinician to direct the tip 434 of the needle 430 into the root canal during use. In some embodiments the needle may include further angled or curved sections, for example having a goose-necked profile to assist in positioning of the tip during procedures. The tip 434 includes an axially directed opening such that a primary flow of irrigant can be ejected in the direction shown by arrow A. Optionally, at least one side vent may also be provided proximal to (but rearward of) the tip 434 to enable an additional side flow to be provided which can be directed towards the side wall of an adjacent portion of the canal as shown by arrow S.

The needle 430 is formed from a polycarbonate material (for example Macrolon 3258). The needle 430 is initially injection moulded as a cylindrical needle prior to being formed into a conical profile in which the rate of change of diameter varies along the length of the needle (as described further below). Table 3 below provides the dimensions of a typical needle made in accordance with an embodiment (which is labelled "Needle X" for ease of reference). As shown in the comparison in the table , the tip 434 of the needle X has an external diameter of less than 200µm which is finer than a 33G needle whilst the proximal end 433 has a diameter of greater than 750µm. The thickness of the needle at the tip 434 is between 40µm, with the embodiment detailed in table 3 having a wall thickness of 34µm. The polycarbonate needle of embodiments has been found to have significantly improved flexibility in comparison to metal needles whilst being able to withstand the required operating pressures which would prevent the use of many thermoplastic materials. The combination of the flexibility and small tip diameter of the needle of embodiments enables the tip to be positioned in uninstrumented, thin, root canals (for example those narrower than 300um), especially if those with higher curvature (for example greater than 30°) which cannot be accessed by conventional needles.

**Table 3: needle dimensions in comparison to standard Birmingham gauge cylindrical needles**

| Distance to tip [mm] | 0 | 5 | 10 | 15 | 20 |
|---|---|---|---|---|---|
| Needle X | 0.19 | 0.27 | 0.38 | 0.54 | 0.76 |
| 30G | 0.312 | 0.312 | 0.312 | 0.312 | 0.312 |
| 32G | 0.325 | 0.325 | 0.325 | 0.325 | 0.325 |
| 33G | 0.21 | 0.21 | 0.21 | 0.21 | 0.21 |
| 34G | 0.159 | 0.159 | 0.159 | 0.159 | 0.159 |

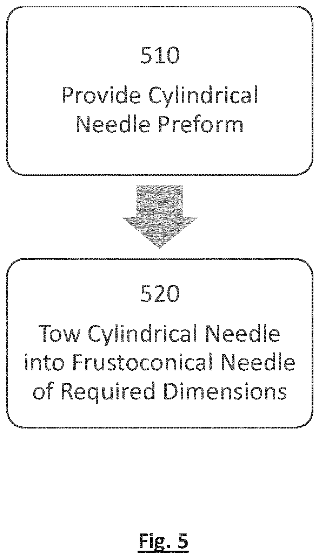

The method of manufacturing a needle assembly 400 in accordance with an embodiment is shown schematically in figure 5. An injection moulded cylindrical needle preform (of polycarbonate) is provided in step 510. The needle preform could be formed as a single cylindrical needle or could be sections cut from a larger extruded or moulded cylindrical tube.

The next step of the process (shown in step 520) comprises forming the cylindrical needle preform into a conical needle, in which the rate of change of diameter varies along the length of the needle, of the required length and diameter. This second step is performed in a towing process (which may also be referred to as a drawing process) which lengthens the needle as it is shaped. By forming the needle directly from the preform, the need to glue or otherwise bond the needle into place is removed. This both reduces the manufacturing steps and provides a robust needle which is capable of withstanding the pressures required whilst having a thin wall thickness and small tip diameter. Alternatively, a conically extruded preform can be towed into the cylindrical needle shape and then glued to a body, which may be injection moulded or a plastic/metal needle or hub.

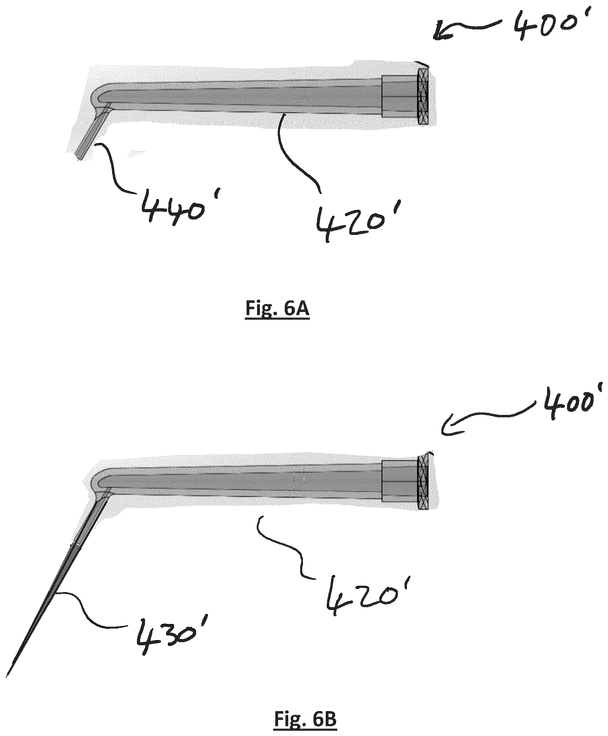

In some embodiments an integrated needle assembly may be initially formed including the cylindrical preform of the needle prior to the step of towing of the needle into its conical form, in which the rate of change of diameter varies along the length of the needle. For example, in some embodiments (as shown in Figure 6 and described below) the cylindrical preform may be initially integrally moulded with the body of the needle assembly (for example in an injection moulding process). In other embodiments a needle preform may be positioned within a mould and the needle body overmoulded using an injection moulding process to form the integral needle assembly including both the needle preform and body. In alternate embodiments the needle preform could be bonded to a moulded needle body (but it will be appreciated that this will usually require more manufacturing steps). After forming the integrated needle assembly, the next step of the process comprises forming the cylindrical preform into a conical needle of the required length and diameter. This second step is performed in a towing process which lengthens the needle as it is shaped. By forming the needle directly from the integral needle assembly the need to glue or otherwise bond the needle into place may be removed. This both reduces the manufacturing steps and provides a robust needle which is capable of withstanding the pressures required whilst having a thin wall thickness and small tip diameter.

An example of a needle assembly 400' comprising a body 420' and a needle preform 440' is shown in figure 6A. In this example the body 420' and needle preform 440' (which is substantially cylindrical) is a single integral injection moulded component. Figure 6B shows the same example needle assembly 400' after the needle preform has been towed to form a conical needle 430' of the required length and diameter.

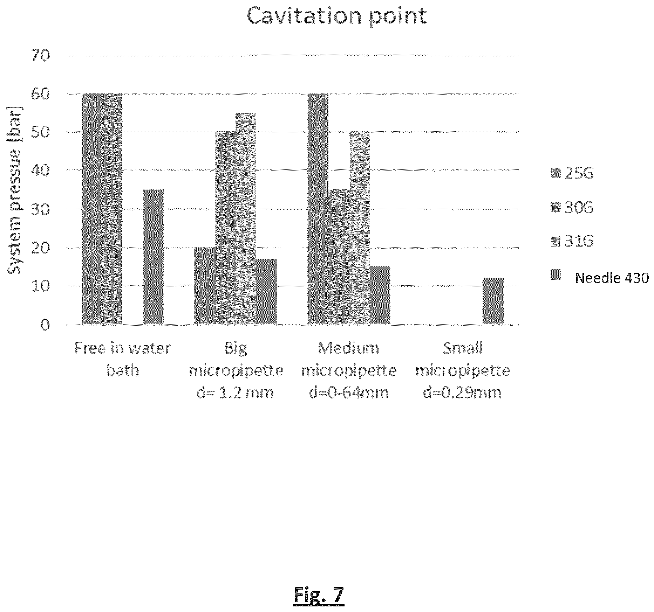

Figure 7 shows testing which was carried out on the conical needle of embodiments in comparison to a conventional needles of 25G, 30G and 31G gauge. To simulate the endodontic method of the invention the needles were tested in a free water bath and micropipettes of decreasing size (1.2mm, 0.6mm and 0.29mm diameter) which provide a simulation of dental canals of different sizes. For each needle and environment the threshold pressure required to cause cavitation in the flow of irrigant ahead of the needle tip was measured. The results clearly showed that the conical needle of embodiments significantly reduced the threshold pressure required for cavitation, especially in a closed canal (for example for the medium micropipette to less than 20 bar in comparison to 50 or 60bar for existing needles). The conical needle of embodiments was the only needle which was able to generate cavitation in the smallest micropipette (with a diameter of 0.29mm).

Further testing was carried out to quantify the ability of needles in accordance with embodiments to penetrate a root canal in comparison to prior art, commercially available needles. A needle in accordance with an embodiment (labelled "Needle Y" for ease of reference) was tested alongside standard metal endodontic needles sized 30G and 31G (both needles being Transcodent brand needles from Sulzer Mixpac, Germany) and a flexible "Irriflex" needle (available from Produit Dentaires SA, Switzerland). For the purpose of this testing standard transparent resin endodontic training blocks where used which have a single curved root canal formed therein. For the testing the training blocks used were 0.02 taper 15-30 2A blocks commercially available from Dentsply Sirona. The blocks were shaped prior to testing with ISO files, one with an ISO 15 file (with taper 0.02) and one with an ISO 20 file (with taper 0.02) to provide two different sized canal.

Each needle was inserted into the two training blocks to the maximum penetration depth. This maximum penetration depth was then measured using an endo stop and an endoscopic ruler. The maximum working length for each canal was also measured using an ISO10 hand file to allow comparison to the penetration depth of each needle. Tables 4 and 5 below provided the results.

**Table 4: Penetration depth of different needles in an ISO15, 0.02 instrumented dental training block**

| **Needle** | **Penetration depth [mm]** | **Distance to WL [mm]** | **Canal length reached [%]** |
|---|---|---|---|
| Needle Y | 17.0 | 0.0 | 100.0 |
| IrriFlex | 11.0 | 6.0 | 64.7 |
| 30G | 12.0 | 5.0 | 70.6 |
| 31G | 12.5 | 4.5 | 73.5 |

**Table 5: Penetration depth of different needles in an ISO20, 0.02 instrumented dental training block**

| **Needle** | **Penetration depth [mm]** | **Distance to WL [mm]** | **Canal length reached [%]** |
|---|---|---|---|
| Needle Y | 16.0 | 0.0 | 100.0 |
| IrriFlex | 10.5 | 5.5 | 65.6 |
| 30G | 11.5 | 4.5 | 71.9 |
| 31G | 12.0 | 4.0 | 75.0 |

It can be seen from this data that the only needle able to reach the full working length of either the ISO 15 or ISO 20 canal was Needle Y, the needle in accordance with an embodiment. The penetration depth of the needle in accordance with an embodiment significantly exceeded that of both the conventional and "flexible" prior art needles. The needle in accordance an embodiment was the only needle which was able to reach the full working length of a minimal instrumented canal (i.e. a canal which has only which may for example be defined as canals which have only been enlarged with an ISO 20 or even ISO 15 handfile).

A key characteristic of needles in accordance with embodiments which is considered to be an enabler for increased canal penetration is the high level of flexibility provided by the design and manufacture of the needle (particularly the flexibility transverse to the needle axis). To quantify the flexibility the applicant tested a series of needles alongside a needle according to an embodiment (labelled "Needle Z"). The same set of needles were tested as in the penetration testing, namely the 30G and 31G Transcodent brand needles, a flexible "Irriflex" needle and the needle of an embodiment.

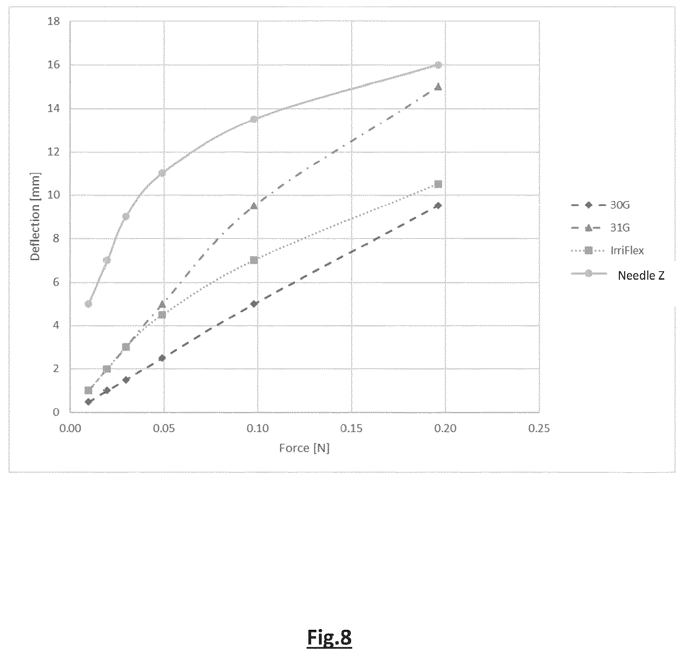

Each needle was clamped horizontally (in a desk vice) in a cantilever manner at a point 20mm from the tip of the needle. A load point was marked at 1mm from the tip of the needle at which a point load would be applied. Each needle was then deflected under a sequence of loads (1g, 2g, 3g, 5g, 10g and 20g corresponding respectively to loads of 0.01N, 0.02N, 0.03N, 0.05N, 0.10N and 0.20N). Under each load the deflected position of the needle tip was recorded. From the recorded position the deflection in the vertical axis (i.e. perpendicular to the initial axis of the needle) was recorded in millimetres. The results for each needle are shown in Table 6 below and shown graphically in Figure 8.

**Table6: Flexibility test results, needle tip deflection in y-direction under different applied loads.**

| Force [N] | 0.01 | 0.02 | 0.03 | 0.05 | 0.10 | 0.20 |
|---|---|---|---|---|---|---|
| **Needle** | **Deflection [mm]** | | | | | |
| - **30G** | 0.5 | 1.0 | 1.5 | 2.5 | 5.0 | 9.5 |
| **- 31G** | 1.0 | 2.0 | 3.0 | 5.0 | 9.5 | 15.0 |
| - **IrriFlex** | 1.0 | 2.0 | 3.0 | 4.5 | 7.0 | 10.5 |
| **- Needle Z** | 5.0 | 7.0 | 9.0 | 11.0 | 13.5 | 16.0 |

It is particularly notable that the needle tip in accordance with an embodiment of the invention deflects by 5 mm under a load of just 0.01N. In contrast all the other needles, including the "flexible" prior art needle, by a maximum of than 1mm at this load. Further a force at least five times higher is required to deflect any of the other needles by the same amount of 5mm. It is clear that the needle of embodiments is more flexible than any of the prior art needles regardless of the load applied. The difference in flexibility between needles of embodiments and the prior art is particularly notable at lower loads. The metal needles (30G and 31G) have deflection behaviour which is close to linear whereas needle Z show logarithmic type behaviour. The applicant has recognised that this is particularly beneficial for an endodontic needle and to access highly curved canals.

It will be appreciated that in use this will provide a needle which is more readily deflected around curves of a minimally instrumented root canal. This increased flexibility, especially at the distal end of a needle in accordance with embodiments, enables the needle to follow strongly curved canals where other needles would become stuck.

It will be further appreciated that the conical shape, in which the rate of change of diameter varies along the length of the needle, combined with the flexible materials reduces substantially the risk of the needle tip to get stuck in the porous dentin walls (i.e. compared to a conical metal needle).

Although the invention has been described above with reference to preferred embodiments, it will be appreciated that various changes or modification may be made without departing from the scope of the invention as defined in the appended claims.

## Claims

1. A needle assembly for endodontic procedure apparatus, the needle assembly comprising:
a connector for removably coupling the needle assembly to a handpiece;
a body portion extending from the connector and providing a fluid conduit; and
a needle (30) extending axially from a proximal end (33) at the body portion to a distal tip (34), the tip having at least one opening that is an axially directed outlet at the tip, the needle having a lumen (32) extending through the needle to define a fluid passageway from the fluid conduit of the body to the at least one opening; wherein
the tip has an external diameter of no more than 300µm and a wall thickness of less than 50 µm, and
the needle is formed from a material having a tensile modulus of at least 1GPa, and
wherein the needle (30) has a tapered profile with the external diameter of the needle portion converging towards the distal tip, the needle (30) having a frustoconical profile, and
wherein a rate of change of diameter varies along a length of the needle.

2. The needle assembly of claim 1, wherein the needle is formed from a material having an ultimate tensile strength of between 15 and 150MPa.

3. The needle assembly of claim 1 or 2, wherein at the distal tip (34) the rate of change in diameter is less than 0.02mm/mm and up to 0.05mm/mm at the proximal end (33).

4. The needle assembly of any preceding claim, wherein the external diameter of the tip (34) is less than 50% of the diameter of the proximal end (33) of the needle, and preferably the external diameter of the tip is between 10 to 30% of the diameter of the proximal end of the needle.

5. The needle assembly of any preceding claim wherein the needle (30) comprises a cylindrical needle which is processed into a conical form.

6. The needle assembly of any preceding claim, wherein the needle assembly comprises a needle (30) having a flexibility such that the needle tip (34) deflects laterally by more than 2mm with a tip load of 0.01N and, additionally or alternatively, by more than 8mm with a tip load of 0.05N.

7. The needle assembly of any preceding claim, wherein the needle (30) is formed from polycarbonate.

8. The needle assembly of any preceding claim, further comprising at least one side vent in the wall of the needle between proximal end at the body portion and the distal tip.

9. An endodontic apparatus (1), the apparatus comprising:
a supply (12) of irrigant fluid;
a pump (14) for delivering irrigant fluid from the supply under pressure;
a handpiece (20) in fluid communication with the pump and comprising the needle assembly of any of claims 1 to 8, the needle (30) of the needle assembly extending from the handpiece to the distal tip (34), the opening at the tip deliver fluid received from the pump into a root canal; and wherein
the needle (30) has a length, extending from its rearward end to its tip (34), of at least 20mm such that the needle tip is positionable within a portion of the root canal; and
the pump (14) delivers irrigant at a delivery pressure less than 80 bar and in excess of a threshold cavitation pressure such that the flow of irrigant through the needle causes a cloud of inertial cavitation to be formed within the irrigant fluid in the root canal forward of the needle tip.

10. The apparatus of claim 9, wherein a minimum exit velocity of the irrigant at the needle tip is at least 20 m/s.

11. The apparatus of claim 9 or 10, wherein a flow rate of the irrigant through the needle is below 175ml/min.

12. The apparatus of any of claims 9 to 11, wherein a size of the cloud of inertial cavitation extends to 0.5 mm, 1mm, 3mm, 5mm, 7mm, 10mm, 15mm, or 20mm beyond the distal tip of the needle.

13. The apparatus of any of claims 9 to 12, wherein the irrigant is water or saline solution.

14. A method of forming a needle for the needle assembly of any of claims 1 to 8, the method comprising:
providing a cylindrical preform of a first length and a first diameter; and
forming the cylindrical preform into a conical needle which tapers inwardly along its length, the conical needle having a length greater than the first length and a diameter at the tip end which is less than the first diameter.

15. The method of claim 14, wherein the preform is provided by injection moulding.

16. The method of claim 14 or 15, wherein forming the conical needle comprises extrusion or drawing the cylindrical preform.

17. A method of forming an endodontic needle assembly comprising a body and a needle in accordance with the method of claim 14, 15 or 16, the method comprising moulding a body portion and affixing the conical needle to the body portion.

18. The method of claim 17, wherein affixing the conical needle to the body portion comprises affixing a proximal end of the cylindrical preform to the body portion prior to forming into a conical needle.

## Patentansprüche

1. Nadelbaugruppe für ein Gerät für endodontische Eingriffe, wobei die Nadelbaugruppe Folgendes umfasst:
einen Verbinder zum lösbaren Koppeln der Nadelbaugruppe mit einem Handstück;
einen Körperabschnitt, der sich von dem Verbinder aus erstreckt und eine Fluidleitung bereitstellt; und
eine Nadel (30), die sich axial von einem proximalen Ende (33) am Körperabschnitt zu einer distalen Spitze (34) erstreckt, wobei die Spitze mindestens eine Öffnung aufweist, die ein axial gerichteter Auslass an der Spitze ist, wobei die Nadel ein Lumen (32) aufweist, das sich durch die Nadel erstreckt, um einen Fluiddurchgang von der Fluidleitung des Körpers zu der mindestens einen Öffnung zu definieren; wobei
die Spitze einen Außendurchmesser von nicht mehr als 300 µm und eine Wandstärke von weniger als 50 µm aufweist und
die Nadel aus einem Material ausgebildet ist, das einen Zugmodul von mindestens 1 GPa aufweist, und
wobei die Nadel (30) ein sich verjüngendes Profil mit dem zur distalen Spitze hin konvergierenden Außendurchmesser des Nadelabschnitts aufweist, wobei die Nadel (30) ein kegelstumpfförmiges Profil aufweist, und
wobei eine Änderungsrate des Durchmessers entlang einer Länge der Nadel variiert.

2. Nadelbaugruppe nach Anspruch 1, wobei die Nadel aus einem Material ausgebildet ist, das eine Zugfestigkeit zwischen 15 und 150 MPa aufweist.

3. Nadelbaugruppe nach Anspruch 1 oder 2, wobei an der distalen Spitze (34) die Änderungsrate des Durchmessers weniger als 0,02 mm/mm und am proximalen Ende (33) bis zu 0,05 mm/mm beträgt.

4. Nadelbaugruppe nach einem der vorhergehenden Ansprüche, wobei der Außendurchmesser der Spitze (34) weniger als 50 % des Durchmessers des proximalen Endes (33) der Nadel beträgt und vorzugsweise der Außendurchmesser der Spitze zwischen 10 und 30 % des Durchmessers des proximalen Endes der Nadel beträgt.

5. Nadelbaugruppe nach einem der vorhergehenden Ansprüche, wobei die Nadel (30) eine zylindrische Nadel umfasst, die zu einer konischen Form verarbeitet ist.

6. Nadelbaugruppe nach einem der vorhergehenden Ansprüche, wobei die Nadelbaugruppe eine Nadel (30) umfasst, die eine Flexibilität aufweist, derart, dass die Nadelspitze (34) bei einer Last an der Spitze von 0,01 N um mehr als 2 mm und, zusätzlich oder alternativ, bei einer Last an der Spitze von 0,05 N um mehr als 8 mm seitlich ausgelenkt wird.

7. Nadelbaugruppe nach einem der vorhergehenden Ansprüche, wobei die Nadel (30) aus Polycarbonat ausgebildet ist.

8. Nadelbaugruppe nach einem der vorhergehenden Ansprüche, ferner umfassend mindestens eine seitliche Austrittsöffnung in der Wand der Nadel zwischen dem proximalen Ende am Körperabschnitt und der distalen Spitze.

9. Endodontisches Gerät (1), wobei das Gerät Folgendes umfasst:
einen Vorrat (12) an Spülflüssigkeit;
eine Pumpe (14) zum Abgeben von Spülflüssigkeit aus dem Vorrat unter Druck;
ein Handstück (20), das in Fluidverbindung mit der Pumpe steht und die Nadelbaugruppe nach einem der Ansprüche 1 bis 8 umfasst, wobei sich die Nadel (30) der Nadelbaugruppe von dem Handstück zu der distalen Spitze (34) erstreckt, wobei die Öffnung an der Spitze von der Pumpe empfangenes Fluid in einen Wurzelkanal abgibt; und
wobei
die Nadel (30) eine sich von ihrem hinteren Ende zu ihrer Spitze (34) erstreckende Länge von mindestens 20 mm aufweist, derart, dass die Nadelspitze innerhalb eines Abschnitts des Wurzelkanals positionierbar ist; und
die Pumpe (14) Spülflüssigkeit mit einem Abgabedruck abgibt, der weniger als 80 bar beträgt und oberhalb eines Kavitationsschwellendrucks liegt, derart, dass die Strömung von Spülflüssigkeit durch die Nadel bewirkt, dass eine Wolke inertialer Kavitation innerhalb der Spülflüssigkeit im Wurzelkanal vor der Nadelspitze ausgebildet wird.

10. Gerät nach Anspruch 9, wobei eine minimale Austrittsgeschwindigkeit der Spülflüssigkeit an der Nadelspitze mindestens 20 m/s beträgt.

11. Gerät nach Anspruch 9 oder 10, wobei eine Durchflussrate der Spülflüssigkeit durch die Nadel unter 175 ml/min liegt.

12. Gerät nach einem der Ansprüche 9 bis 11, wobei sich eine Größe der Wolke inertialer Kavitation um 0,5 mm, 1 mm, 3 mm, 5 mm, 7 mm, 10 mm, 15 mm oder 20 mm über die distale Spitze der Nadel hinaus erstreckt.

13. Gerät nach einem der Ansprüche 9 bis 12, wobei die Spülflüssigkeit Wasser oder Salzlösung ist.

14. Verfahren zum Ausbilden einer Nadel für die Nadelbaugruppe nach einem der Ansprüche 1 bis 8, wobei das Verfahren Folgendes umfasst:
Bereitstellen eines zylindrischen Vorformlings mit einer ersten Länge und einem ersten Durchmesser; und
Ausbilden des zylindrischen Vorformlings zu einer konischen Nadel, die sich entlang ihrer Länge nach innen verjüngt, wobei die konische Nadel eine Länge, die größer als die erste Länge ist, und am Spitzenende einen Durchmesser aufweist, der kleiner als der erste Durchmesser ist.

15. Verfahren nach Anspruch 14, wobei der Vorformling durch Spritzgießen bereitgestellt wird.

16. Verfahren nach Anspruch 14 oder 15, wobei das Ausbilden der konischen Nadel ein Extrudieren oder Ziehen des zylindrischen Vorformlings umfasst.

17. Verfahren zum Ausbilden einer endodontischen Nadelbaugruppe mit einem Körper und einer gemäß dem Verfahren nach Anspruch 14, 15 oder 16 ausgebildeten Nadel, wobei das Verfahren das Formen eines Körperabschnitts und das Befestigen der konischen Nadel an dem Körperabschnitt umfasst.

18. Verfahren nach Anspruch 17, wobei das Befestigen der konischen Nadel an dem Körperabschnitt das Befestigen eines proximalen Endes des zylindrischen Vorformlings an dem Körperabschnitt vor dem Ausbilden zu einer konischen Nadel umfasst.

## Revendications

1. Ensemble aiguille pour appareil d'intervention endodontique, l'ensemble aiguille comprenant :
un connecteur pour accoupler de manière amovible l'ensemble aiguille à une pièce à main ;
une portion de corps s'étendant depuis le connecteur et définissant un conduit de fluide ; et
une aiguille (30) s'étendant axialement depuis une extrémité proximale (33) au niveau de la portion de corps jusqu'à une pointe distale (34), la pointe présentant au moins une ouverture qui est une sortie dirigée axialement au niveau de la pointe, l'aiguille présentant une lumière (32) s'étendant à travers l'aiguille pour définir un passage de fluide depuis le conduit de fluide du corps jusqu'à ladite au moins une ouverture ; dans lequel
la pointe présente un diamètre externe non supérieur à 300 µm et une épaisseur de paroi inférieure à 50 µm, et
l'aiguille est formée à partir d'un matériau présentant un module d'élasticité en traction d'au moins 1 GPa, et
dans lequel l'aiguille (30) présente un profil effilé, le diamètre externe de la portion d'aiguille convergeant vers la pointe distale, l'aiguille (30) présentant un profil tronconique, et
dans lequel un taux de variation du diamètre varie le long d'une longueur de l'aiguille.

2. Ensemble aiguille selon la revendication 1, dans lequel l'aiguille est formée à partir d'un matériau présentant une résistance ultime à la traction comprise entre 15 et 150 MPa.

3. Ensemble aiguille selon la revendication 1 ou 2, dans lequel, au niveau de la pointe distale (34), le taux de variation du diamètre est inférieur à 0,02 mm/mm et va jusqu'à 0,05 mm/mm au niveau de l'extrémité proximale (33).

4. Ensemble aiguille selon l'une quelconque des revendications précédentes, dans lequel le diamètre externe de la pointe (34) est inférieur à 50 % du diamètre de l'extrémité proximale (33) de l'aiguille, et de préférence le diamètre externe de la pointe est compris entre 10 et 30 % du diamètre de l'extrémité proximale de l'aiguille.

5. Ensemble aiguille selon l'une quelconque des revendications précédentes, dans lequel l'aiguille (30) comprend une aiguille cylindrique qui est transformée en une forme conique.

6. Ensemble aiguille selon l'une quelconque des revendications précédentes, dans lequel l'ensemble aiguille comprend une aiguille (30) présentant une flexibilité telle que la pointe d'aiguille (34) fléchit latéralement de plus de 2 mm sous une charge de 0,01 N à la pointe et, en complément ou en variante, de plus de 8 mm sous une charge de 0,05 N à la pointe.

7. Ensemble aiguille selon l'une quelconque des revendications précédentes, dans lequel l'aiguille (30) est formée à partir de polycarbonate.

8. Ensemble aiguille selon l'une quelconque des revendications précédentes, comprenant en outre au moins un orifice latéral dans la paroi de l'aiguille entre l'extrémité proximale au niveau de la portion de corps et la pointe distale.

9. Appareil endodontique (1), l'appareil comprenant :
une réserve (12) de fluide d'irrigation ;
une pompe (14) pour délivrer sous pression du fluide d'irrigation depuis la réserve ;
une pièce à main (20) en communication fluidique avec la pompe et comprenant l'ensemble aiguille selon l'une quelconque des revendications 1 à 8, l'aiguille (30) de l'ensemble aiguille s'étendant depuis la pièce à main jusqu'à la pointe distale (34), l'ouverture au niveau de la pointe délivrant du fluide reçu de la pompe dans un canal radiculaire ; et
dans lequel
l'aiguille (30) présente une longueur, s'étendant depuis son extrémité arrière jusqu'à sa pointe (34), d'au moins 20 mm de telle sorte que la pointe d'aiguille est positionnable à l'intérieur d'une portion du canal radiculaire ; et
la pompe (14) délivre de l'irrigant à une pression de refoulement inférieure à 80 bar et supérieure à une pression seuil de cavitation de telle sorte que l'écoulement d'irrigant à travers l'aiguille provoque la formation d'un nuage de cavitation inertielle à l'intérieur du fluide d'irrigation dans le canal radiculaire, en avant de la pointe d'aiguille.

10. Appareil selon la revendication 9, dans lequel une vitesse de sortie minimale de l'irrigant au niveau de la pointe d'aiguille est d'au moins 20 m/s.

11. Appareil selon la revendication 9 ou 10, dans lequel un débit de l'irrigant à travers l'aiguille se situe en dessous de 175 ml/min.

12. Appareil selon l'une quelconque des revendications 9 à 11, dans lequel le nuage de cavitation inertielle présente une étendue de 0,5 mm, 1 mm, 3 mm, 5 mm, 7 mm, 10 mm, 15 mm ou 20 mm au-delà de la pointe distale de l'aiguille.

13. Appareil selon l'une quelconque des revendications 9 à 12, dans lequel l'irrigant est de l'eau ou une solution saline.

14. Procédé de formation d'une aiguille pour l'ensemble aiguille selon l'une quelconque des revendications 1 à 8, le procédé comprenant :
la fourniture d'une préforme cylindrique d'une première longueur et d'un premier diamètre ; et
la mise en forme de la préforme cylindrique en une aiguille conique qui s'effile vers l'intérieur le long de sa longueur, l'aiguille conique présentant une longueur supérieure à la première longueur et un diamètre au niveau de l'extrémité de pointe qui est inférieur au premier diamètre.

15. Procédé selon la revendication 14, dans lequel la préforme est fournie par moulage par injection.

16. Procédé selon la revendication 14 ou 15, dans lequel la mise en forme de l'aiguille conique comprend l'extrusion ou l'étirage de la préforme cylindrique.

17. Procédé de formation d'un ensemble aiguille endodontique comprenant un corps et une aiguille formée conformément au procédé selon la revendication 14, 15 ou 16, le procédé comprenant le moulage d'une portion de corps et la fixation de l'aiguille conique à la portion de corps.

18. Procédé selon la revendication 17, dans lequel la fixation de l'aiguille conique à la portion de corps comprend la fixation d'une extrémité proximale de la préforme cylindrique à la portion de corps avant la mise en forme en une aiguille conique.
